(19) **Europäisches Patentamt / European Patent Office / Office européen des brevets**

(11) **EP 4 125 049 A1**

(12) **EUROPEAN PATENT APPLICATION**

(43) Date of publication:
**01.02.2023 Bulletin 2023/05**

(21) Application number: **21188415.0**

(22) Date of filing: **29.07.2021**

(51) International Patent Classification (IPC):
**G06V 10/44** (2022.01)    **G06V 10/774** (2022.01)
**G06V 10/82** (2022.01)    **G06V 30/18** (2022.01)
**G06V 10/25** (2022.01)    **G06V 10/26** (2022.01)

(52) Cooperative Patent Classification (CPC):
**G06V 10/774; G06V 10/26; G06V 10/454;
G06V 10/82;** G06V 2201/031

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **PRASAD, Vidya Madapusi Srinivas
5656 AE Eindhoven (NL)**
• **MALLYA, Yogisha
5656 AE Eindhoven (NL)**
• **SHASTRY, Arun Heddese Shastry
5656 AE Eindhoven (NL)**

(74) Representative: **Philips Intellectual Property &
Standards
High Tech Campus 52
5656 AG Eindhoven (NL)**

(54) **IDENTIFYING ANATOMICAL FEATURES**

(57)    In an embodiment, a computer-implemented method (100) is described. The method (100) comprises receiving (102) imaging data representative of a volume of a subject's anatomy. The received imaging data comprises at least one unidentified anatomical feature of interest. The method (100) further comprises identifying (104) the anatomical feature of interest in the received imaging data using a machine learning model configured to implement a segmentation approach to identify the at least one anatomical feature of interest.

Fig. 1

EP 4 125 049 A1

**Description**

TECHNICAL FIELD OF THE INVENTION

The invention relates to a method, a non-transitory machine-readable medium and apparatus for identifying anatomical features.

BACKGROUND OF THE INVENTION

Magnetic resonance imaging (MRI) and other radiographic imaging techniques for imaging the heart may be used to provide data to facilitate quantification of ventricular volume and assessment of various parameters associated with the heart. For such assessments, various cardiac structures may be delineated. For example, the left and right ventricular chambers and the left ventricular musculature may be delineated in order to calculate the volume of the cavities in diastole and systole (and thus the ejection fraction), as well as the myocardial mass. These parameters may be useful for detecting and quantifying different pathologies. Manual tracing of these cardiac structures is time consuming as the amount of data involved is large e.g., due to the number of imaging slices obtained. For example, there may be more than ten short axis slices per phase and more than twenty phases in a cine MRI of a patient. It may take approximately thirty minutes for a trained expert to manually trace ventricles and analyze images of a single subject.

An example clinical workflow uses semi-automatic techniques to segment heart chambers in a phase and propagate the contours to other phases in the cine cardiac MRI. One of the major challenges is the lack of accurate automatic ventricle segmentation in the basal region of the heart. In some cases, an expert may need to spend a significant amount of time manually correcting the segmentation output at the apical and basal slices of the cardiac MRI.

One of the major clinical parameters assessed in cardiac MRI is the ejection fraction of the left ventricle. Ventricular segmentation may be used to determine the ejection fraction from basal imaging slices. Automatic segmentation methods may struggle to differentiate between the right ventricle (RV), left ventricle (LV), right atrium (RA), left atrium (LA) and surrounding structures in the basal imaging slices. Manual editing of the automatic segmentation may be needed to improve the accuracy of the segmentation, adding to the time spent by the expert dealing with the segmentation before they can assess the pathology. Certain structures such as those in the apical and basal image slices may be more difficult to automatically segment than structures in mid-ventricular image slices.

Techniques such as deep learning may provide accurate identification of strong boundaries e.g., when compared to model/atlas-based segmentation. However, the segmentation in basal slices (and certain other anatomical features) may be challenging due to the poor contrast (e.g., in terms of pixel intensity gradient) at the atrial/ventricular interface. Certain deep learning techniques may result in poor segmentation in apical/basal imaging slices and between various other anatomical features.

SUMMARY OF THE INVENTION

Aspects or embodiments described herein may relate to improving identification of certain anatomical features from imaging data. Aspects or embodiments described herein may obviate one or more problems associated with training a machine learning model to identify certain anatomical features from imaging data.

In a first aspect, a method is described. The method is a computer-implemented method. The method comprises receiving imaging data representative of a volume of a subject's anatomy. The received imaging data comprises at least one unidentified anatomical feature of interest. The method further comprises identifying the anatomical feature of interest in the received imaging data using a machine learning model configured to implement a segmentation approach to identify the at least one anatomical feature of interest.

The machine learning model is trained using a map generated for each of a series of training data sets. Each training data set comprises training imaging data representative of a volume of a training anatomy. The map is configured to cause the machine learning model to penalize learning error in at least one training region comprising the at least one unidentified anatomical feature of interest in the training data set associated with the map.

The map for each training data set is generated by applying a spatial function to at least one control location in the training data set associated with the map.

The spatial function is configured to specify a spatial distribution of the at least one training region relative to the at least one control location in the training data set associated with the map.

Some embodiments relating to the first and the other aspects are described below.

In some embodiments, a spatial overlap between adjacent training regions specified by the map generated for each training data set defines at least one prioritized training region in the training data set for the machine learning model to use to prioritize penalization of learning error in the at least one prioritized training region over penalization of learning error in: non-overlapping training regions of the training data set and/or another region of the training data set.

In some embodiments, the received imaging data corresponds to a basal region of the subject's heart. The at least one anatomical feature of interest to be identified using the trained machine learning model may comprise at least one anatomical interface between adjacent chambers of the subject's heart.

In some embodiments, the at least one control location is identified based on a result of an initial segmentation model used to identify the at least one control location.

In some embodiments, the at least one control location comprises: a centroid of a chamber of a heart; and/or an end point and/or a junction of ventricular and/or atrial musculature defining at least one interface between respective chambers of the heart.

In some embodiments, the spatial distribution of the at least one training region is defined by at least one parameter of the spatial function. The at least one parameter may be based on at least one dimension of at least one previously-identified anatomical feature in the training data set.

In some embodiments, the spatial function comprises a first Gaussian-based function centered about an origin defined by the at least one control location in the training data set. The spatial distribution of the at least one training region defined by the first Gaussian-based function may be distal from the origin.

In some embodiments, the first Gaussian-based function comprises an inverted Gaussian function.

In some embodiments, the volume comprises at least part of a heart. The first Gaussian-based function may be centered at a centroid of at least one chamber of the heart.

In some embodiments, the spatial function comprises a second Gaussian-based function extending between adjacent control locations in the training data set. The spatial distribution of the at least one training region defined by the second Gaussian-based function may comprise the adjacent control locations.

In some embodiments, the volume comprises at least part of a heart. The spatial distribution of the at least one training region defined by second Gaussian-based function may comprise a line connecting adjacent end points and/or junctions of ventricular and/or atrial musculature defining at least one interface between respective chambers of the heart.

In some embodiments, a loss function used for penalizing learning error is modified by the map. The loss function may be based on a difference between a measured value and a ground truth value for at least one pixel or voxel of the training imaging data.

In some embodiments, the method further comprises training the machine learning model. The method comprises receiving at least one of the series of training data sets and an indication of a ground truth identifying the anatomical feature of interest in each of the training data sets. The method further comprises determining the at least one control location in the at least one training data set. The method further comprises generating the map for the at least one training data set by applying the spatial function to the at least one control location in the training data set. The map may be indicative of a loss function to apply to each pixel or voxel of the training data set. The method further comprises training the machine learning model using the at least one training data set of the series and the corresponding map for the at least one training data set.

In a second aspect, a non-transitory machine-readable medium is described. The non-transitory machine-readable medium stores instructions executable by at least one processor. The instructions are configured to cause the at least one processor to receive imaging data representative of a volume of a subject's anatomy. The received imaging data comprises at least one unidentified anatomical feature of interest. The instructions are further configured to cause the at least one processor to identify the anatomical feature of interest in the received imaging data using a machine learning model configured to implement a segmentation approach to identify the at least one anatomical feature of interest. The machine learning model is referred to in the first aspect and related embodiments.

In a third aspect, apparatus is described. The apparatus comprises at least one processor communicatively coupled to an interface. The interface is configured to receive imaging data representative of a volume of a subject's anatomy. The received imaging data comprises at least one unidentified anatomical feature of interest. The apparatus further comprises a non-transitory machine-readable medium storing instructions readable and executable by the at least one processor. The instructions are configured to cause the at least one processor to identify the anatomical feature of interest in the received imaging data using a machine learning model configured to implement a segmentation approach to identify the at least one anatomical feature of interest. The machine learning model is referred to in the first aspect and related embodiments.

These and other aspects of the invention will be apparent from and elucidated with reference to the embodiment(s) described hereinafter.

BRIEF DESCRIPTION OF DRAWINGS

Exemplary embodiments of the invention will now be described, by way of example only, with reference to the following drawings, in which:

Figure 1 refers to a method of identifying anatomical features according to an embodiment;

Figure 2 is a schematic drawing of a system for identifying anatomical features according to an embodiment;

Figure 3 shows an image where certain anatomical features have been identified according to an embodiment;

Figure 4 refers to a flowchart depicting a method of identifying anatomical features according to an embodiment;

Figure 5 shows an image where certain control locations have been identified according to an embodiment;

Figure 6 depicts a spatial function used in certain embodiments;

Figure 7 depicts another spatial function used in certain embodiments;

Figure 8 depicts a map generated based on an image according to certain embodiments;

Figure 9 refers to a method of generating display data according to an embodiment;

Figure 10 refers to a method of training a machine learning model according to an embodiment;

Figure 11 is a schematic drawing of a machine-readable medium for identifying anatomical features according to an embodiment; and

Figure 12 is a schematic drawing of apparatus for identifying anatomical features according to an embodiment.

DETAILED DESCRIPTION OF THE EMBODIMENTS

A machine learning model (such as a deep neural network based on the 'U-Net' architecture described by Ronneberger et al., "U-Net: Convolutional Networks for Biomedical Image Segmentation ", arXiv: 1505.04597 (2015), the entire content of which is incorporated herein by reference) may be trained to identify certain anatomical features via segmentation of imaging data obtained by a radiographic imaging apparatus such as an MRI scanner, CT scanner, etc. In some example training procedures, the machine learning model may attempt to reduce identification error by penalizing models which result in error between the output from the model and the 'ground truth' data.

In these example training procedures, each region of the imaging data used for training may be penalized uniformly such that all regions of the imaging data may be treated equally during the training procedure. However, some regions of the imaging data may be challenging for the machine learning model to identify accurately. Example challenging regions include interfaces between certain anatomical features due to poor/weak pixel/voxel intensity contrast across such interfaces. While certain anatomical features/regions of the heart (such as the centroids of heart chambers) may be accurately detected using certain machine-learning based models (e.g., the U-Net architecture) or certain 'traditional' techniques (e.g., model/atlas-based segmentation), certain interfaces (such as the atrial/ventricular interface) may be difficult to accurately detect with either of such techniques.

A framework described herein allows a machine learning model to focus more on learning to identify certain regions of the imaging data associated with poor/weak interfaces (i.e., where there may be poor/weak pixel/voxel intensity contrast across such interfaces). As described herein, the framework has been demonstrated on cardiac MRI data. However, the framework may be generalized to other anatomical sites or structures such as the brain, liver, etc. In addition, the imaging data may be obtained with any appropriate radiographic imaging technique such as CT scanning, ultrasound-based imaging, etc.

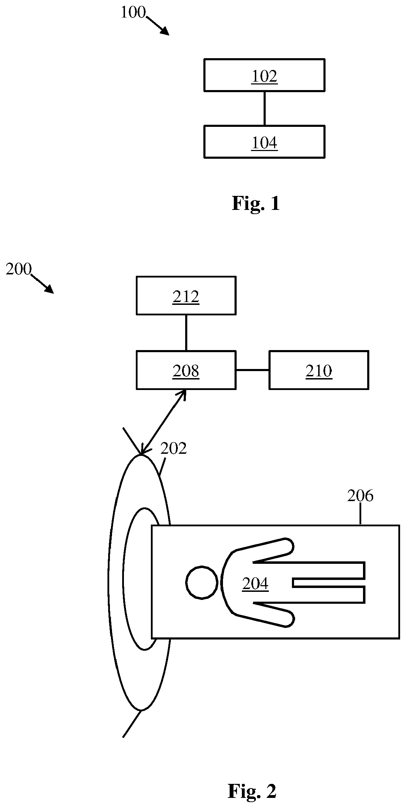

Figure 1 refers to a method 100 of identifying anatomical features according to an embodiment. The method 100 is a computer-implemented method, which may be implemented on a computing device such as described below. For example, the method 100 may be implemented by a user computer (e.g., associated with use by a clinician such as a radiologist), a server, a cloud-based service and/or any other computing device whether in the locality of a radiographic imaging apparatus for acquiring imaging data or remote from this locality.

The method 100 comprises, at block 102, receiving imaging data representative of a volume of a subject's anatomy. The received imaging data comprises at least one unidentified anatomical feature 'of interest'.

A radiographic imaging apparatus may acquire at least one image (i.e., 'imaging data') by imaging at least part of the subject's anatomy. A set of images (e.g., image slices) acquired by the radiographic imaging apparatus may be aligned together and collectively represent a volume of the subject's anatomy (e.g., part of their body comprising at least one anatomical site of interest such as the subject's heart, etc.). In some cases, a single set of images representing the volume may be acquired. In other cases, multiple images for each slice location may be acquired over a period of time e.g., if the part of the body (e.g., the heart) moves.

Within the volume, there may be at least one unidentified anatomical feature of interest such as an interface that appears as a 'weak' difference in pixel/voxel intensity in the region. The unidentified anatomical feature of interest may either be previously unidentifiable or a previously identified anatomical feature that cannot be verified as being an accurately identified anatomical feature of interest.

In the case of the heart, the unidentified anatomical feature of interest may be the atrial/ventricular interface e.g., as depicted in imaging data corresponding to the basal/apical region. In some cases, at least one anatomical feature (other than the unidentified anatomical feature of interest) may have already been identified in the imaging data (e.g., based on an initial segmentation operation using a deep learning approach or a traditional approach). For example, in the case of the heart, the previously-identified anatomical feature may be a centroid of a chamber of the heart (and the approximate shape and position of the feature), which may be easier for certain segmentation methods to identify than the atrial/ventricular interface or certain other interfaces.

The method 100 comprises, at block 104, identifying the at least one anatomical feature of interest in the received imaging data using a machine learning model configured to implement a segmentation approach to identify the at least one anatomical feature of interest.

The segmentation approach, which may involve a deep learning approach such as based on the 'U-Net' architecture described above, may allow the machine learning model to identify the at least one anatomical feature of interest in the received imaging data.

For example, the radiographic imaging apparatus may obtain imaging data of a subject such as a patient. The computing device may receive this imaging data and then apply the segmentation approach according to block 104 to identify the at least one anatomical feature of interest. The identification of the at least one anatomical feature of interest may involve generating data that is representative of a segmentation of at least one region of the imaging data from another region of the imaging data. Such generated data may be used to visually represent the segmented part(s) within the volume e.g., for being displayed to show the segmented region(s). A clinician or other operator may use this segmentation approach to visualize the previously-unidentified anatomical feature of interest.

The machine learning model is trained using a map (e.g., a 'penalty map' or 'heat map') generated for each of a series of training data sets. Each training data set comprises training imaging data representative of a volume of a training anatomy. The map is configured to cause the machine learning model to penalize learning error in at least one training region comprising the at least one unidentified anatomical feature of interest in the training data set associated with the map. In other words, during a learning procedure, the map may be used to cause penalization of learning error in region(s) of the training imaging data that comprise the at least one anatomical feature of interest. In some cases, the map may serve as an 'attention' mechanism to focus the model, when training the model, on at least one region in interest. Thus, in some cases, the map may be used to calculate a 'loss function' (as described below) for at least one point (e.g., pixel or pixel region) in the training imaging data to penalize learning error at the at least one point and/or may serve as an attention mechanism during the training. In addition, in cases where the map was used as an attention mechanism during training, such a map may be generated based on the received (input) imaging data and used as an additional input for the received (input) imaging data as an attention mechanism to focus the model, when implementing the method 100, on at least one region of interest comprising the at least one anatomical feature of interest.

Thus, the training may be based on a series of training data sets where each training data set in the series comprises imaging data corresponding to a part of the body of a training subject (i.e., the part of the body of the training subject may be referred to herein as a 'training anatomy'). The part of the body comprises the at least one anatomical feature of interest. For example, if the at least one anatomical feature of interest is in the heart, each training data set may comprise imaging data of the heart from a set of training subjects. At least one expert such as a senior radiologist may indicate the 'ground truth' identifying the anatomical feature of interest in each training data set of the series.

By way of example, the implementation of certain embodiments described herein has been demonstrated based on a series comprising twenty cardiac 'training' data sets where k-fold (e.g., 10-fold) cross validation is used to test the accuracy of the trained model. The series of cardiac training data sets used comprised a selection of different cardiac image slices (i.e., from different patients at different cardiac phases). It is possible to train and test the model with a different number in the series. In addition, augmentation techniques such as adding Gaussian noise, etc., may be used to generate additional training data sets for the series. In the present case involving twenty pediatric training data sets, a senior radiologist indicated the 'ground truth' location of the anatomical feature of interest in each of the training data sets. The example process for training and testing the machine learning model based on the twenty training data sets is described below. As is noted below, the training led to a model that provides accurate segmentation, which may facilitate automated segmentation. Other training data sets may be selected based on similar principles.

Example training processes that can be used are described in more detail with reference to the process that was used in the present case (i.e., training using the series of twenty pediatric 'training' data sets).

The series of twenty pediatric cardiac 'training' datasets that were used had a high variability in structures across the series. The four chambers of the heart and the myocardium were manually segmented by a senior radiologist to indicate the 'ground truth' for each data set.

The challenging regions of interest in the imaging data that were considered by the model can be identified by an expert (i.e., the senior radiologist) or automatically identified based on errors in at least one region of interest according to certain baseline models.

Certain anatomical features such as the centroid/primary degrees may help with segmentation in challenging areas. In some cases, magnitudes of variation can be identified manually by the expert so that the locations and structure (e.g., shape/size) of anatomical features then can be explicitly learned by the model. However, as was used in the example training process of the present case, the features can be inferred by training an initial model with a U-Net model (which may include a loss function) to obtain an initial segmentation. From the initial segmentation, the features that are deemed relevant can be automatically identified again using image processing methods.

Based on the features extracted by the initial segmentation, a 'penalty' map was generated. The penalty map was then provided along with the input imaging data and ground truth expert segmentation to a (2D slice-wise) U-Net model for training. In the present case, the penalty map was used in two ways: (1) for penalizing the training in challenging areas; and (2) providing an 'attention' mechanism aiding the model to focus on the previously learned regions and thereby simplify the improvement of the segmentation after the initial segmentation.

The example described above refers to using a series of twenty pediatric cardiac training data sets. The results of this experiment are described below. In another experiment, a series of fifty adult cardiac training data was used to train the machine learning model as referred to in the method 100. In this other experiment, the training approach/attention mechanism described herein was validated due to the improvement of segmentation of challenging features of interest.

With reference to the method 100, the generation of the map for the training data sets is now described. The same principle of map generation may be applied if generating the map based on the received (input) imaging data.

The map for each training data set is generated by applying a spatial function to at least one control location in the training data set associated with the map.

The spatial function is configured to specify a spatial distribution of the at least one training region relative to the at least one control location in the training data set associated with the map.

In some cases, the at least one control location may correspond to at least one previously-identified location in the training data set. For example, the at least one control location may correspond to a certain region of the training anatomy such as a centroid of a heart chamber that may, in some cases, be accurately identified from a segmentation approach such as based on the U-Net architecture.

The spatial function applied to the at least one control location may be used to generate the map. By applying the spatial function to the at least one control location, the map may comprise at least one training region specified according to the spatial distribution associated with the spatial function. In other words, the map may indicate which region(s) of the training data set represent the at least one 'training region' derived from the spatial distribution. In use of the map during training, the at least one training region may indicate which region of the training imaging data to focus on for learning about (i.e., reducing error in) the at least one anatomical feature of interest. In some cases, the at least one training region may at least partially overlap with the at least one anatomical feature of interest. Thus, a determination of the spatial distribution of the at least one training region may provide an indication of where the anatomical feature(s) of interest may be found in the training imaging data so that the machine learning model can be trained to reduce identification error in such training region(s).

Certain embodiments described here may provide functionality to facilitate identification of certain anatomical features using the trained machine learning model. For instance, the at least one control location in combination with the application of the spatial function may provide guidance to a segmentation model such as implemented by the U-Net architecture about where, in the training imaging data, to focus on learning to improve identification of the at least one anatomical feature of interest.

The map resulting from the combination of the at least one control location and the application of the spatial function may define a 'penalty' or 'heat' map indicating which region(s) of the training imaging data to focus on learning about to reduce identification error. For example, in region(s) where there is the greatest 'penalty' as indicated by relative 'heat' between different regions of the training imaging data, the machine learning model may attempt learning by minimizing error in such region(s). In other words, the map may indicate to the model which region(s) in the training imaging data are useful for the machine learning model to better understand in order to identify the at least one anatomical feature of interest.

For example, the map may facilitate penalization of automated model learning based on distance from the at least one control region such that maximum penalty is given to at least one training region that comprises the ventricle-atrium interface, the ventricular interfaces and/or any other interfaces of interest.

Certain difficult-to-accurately identify anatomical features may not be easily identified when each region of the training imaging data is treated equally as in some techniques which may 'blindly' learn, detect and/or segment based on spatial intensity patterns comprising 'strong' (i.e., high pixel contrast) interfaces that are easier for such techniques to detect. In cases where each region of the training imaging data is treated equally, the final identification error (which may be quantified by the 'Dice' score used to indicate the identification accuracy of segmentation models) obtained is an average across all regions. Hence, although the overall 'Dice' score might be high for received imaging data, the accuracy of the segmentation at certain regions such as in the basal region may be low (i.e., the Dice score may appear good overall but this may mask the identification error in certain region(s) such as the basal region). However, the generated map may facilitate improved training by increasing the attention paid to (e.g., by penalizing) certain regions of the training imaging data associated with difficult-to-accurately identify anatomical features.

Based on the series of training data sets described above (i.e., the series of twenty pediatric cardiac data sets), the trained machine learning model was tested and provided segmentation with an accuracy (according to a 'Dice' score) of 0.931 (compared with a baseline accuracy of 0.891) with a standard deviation of 0.018 (compared with a baseline standard deviation of 0.04). This improvement of accuracy demonstrated by the experimental data proves the validity of the approaches described herein.

Certain embodiments (e.g., the method 100 and/or related embodiments) may therefore facilitate improved accuracy for identifying the at least one anatomical feature of interest in the received imaging data. This improved accuracy may lead to more accurate segmentation and may permit potentially automated segmentation with reduced or no manual input by an expert. This improved segmentation accuracy may be useful for certain views associated with difficult-to-accurately identify anatomical features such as certain boundaries in basal and/or apical regions of the heart.

The map may be computationally straightforward to generate, as well being readily combined into the training procedure in order to facilitate automated training/guidance of the machine learning model. The map may provide an indication of which region(s) of the training imaging data to focus on whether the training imaging data refers to one-, two-, three- or four-dimensional imaging data. For example, the 'map' may have any appropriate dimension according to the format of the training imaging data so that the appropriate region(s) of the training imaging data are indicated as being of relevance for focused learning (e.g., with learning penalized at such region(s)).

Figure 2 shows an example system 200 for implementing certain embodiments described herein (e.g., the method 100 and certain other embodiments). The system 200 comprises a radiographic imaging apparatus 202 such as a magnetic resonance imaging (MRI) scanner, computed tomography (CT) scanner, etc. In use of the system 200, a subject such as a patient 204 and any other medical equipment (not shown) is supported by a couch 206 associated with the radiographic imaging apparatus 202. The radiographic imaging apparatus 202 is communicatively coupled to a controller 208 (which is an example of a 'computing device' as referred to in certain embodiments) for sending/receiving data (such as control data for controlling/monitoring the operation of the radiographic imaging apparatus 202 and/or imaging data acquired by the radiographic imaging apparatus 202) to/from the radiographic imaging apparatus 202. The controller 208 is communicatively coupled to a user interface such as a display 210 for displaying imaging data and/or other information associated with use of the system 200.

In some cases, as shown by Figure 2, the controller 208 may be communicatively coupled to an optional service provider 212 (e.g., a manufacturer of the radiographic imaging apparatus 202 or other entity that may control/monitor/perform data processing in relation to the radiographic imaging apparatus 202 and/or the controller 208). The service provider 212 may be a server or cloud-based service to which the controller 208 may be connected to exchange various data. In some cases, the service provider 212 may provide a data processing service (e.g., to at least partially implement certain embodiments described herein). In some cases, the controller 208 may perform data processing (e.g., to at least partially implement certain embodiments described herein). In some cases, the controller 208 and the service provider 212 may exchange data and/or collectively perform/facilitate data processing in order to implement certain embodiments described herein. In some cases, the controller 208 may receive updates (e.g., software updates, etc.) from the service provider 212. Such updates may include information relating to new and/or updated models (e.g., trained machine learning models and/or parameters such as neural network weights for the controller 208 to implement such trained machine learning models). Thus, in one scenario, the service provider 212 may train a machine learning model (e.g., such as according to certain embodiments described herein) and then send the trained machine learning model (or information such as parameters in order to put such a machine learning model into effect) to the controller 208 (to allow the controller 208 to implement the trained machine learning model according to certain embodiments described herein). In another scenario, the controller 208 may be pre-loaded with the trained machine learning model. In another scenario, the controller 208 may not implement the machine learning model; instead the service provider 212 may implement the trained machine learning model (e.g., based on imaging data sent by the controller 208 to the service provider 212). Thus, the controller 208 and/or the service provider 212 may implement the 'computing device' referred to in various embodiments described herein (e.g., the method 100 and other embodiments described herein).

The controller 208 and the service provider 212 (if present) may each comprise processing circuitry (such as at least one processor, not shown) configured to perform data processing for implementing certain embodiments described herein. The controller 208 and/or the service provider 212 may comprise or have access to a memory (e.g., a non-transitory machine-readable medium) storing instructions which, when executed by the processing circuitry, causes the processing circuitry to implement certain embodiments described herein.

In some cases, the controller 208 may be implemented by a user computer. In some cases, the controller 208 and/or the service provider 212 may be implemented by a server or cloud-based computing service. In some cases, a memory (such as the non-transitory machine-readable medium described above and/or another memory such as another non-transitory machine-readable medium or a transitory machine-readable medium) may store information relating to the machine learning model (e.g., the machine learning model itself and/or parameters relating to the model) and/or other data such as imaging data associated with the radiographic imaging apparatus 202.

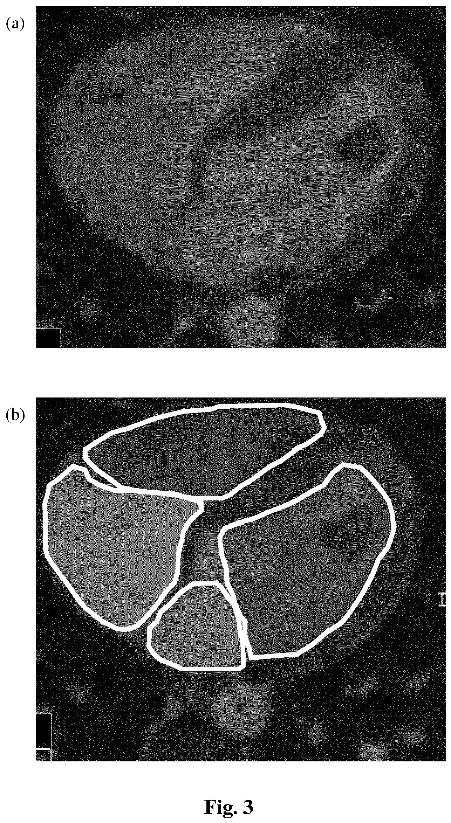

Figure 3 shows imaging data comprising an image comprising a basal region of the heart (a) before and (b) after identification of anatomical features according to certain embodiments described herein. The image (a) may have been obtained by the radiographic imaging apparatus 202 of Figure 2. The controller 208 and/or the service provider 212 may then receive the imaging data and automatically identify at least one anatomical feature of interest according to certain embodiments described herein (e.g., the method 100). In this case, the image (b) depicts this identification by showing the segmentation (in white lines) between the chambers of the heart. As shown by Figure 3, the segmentation achieved by embodiments described herein has overcome the issue of poor pixel contrast across certain interfaces (e.g., the atrial/ventricular interface), as best shown by image (a).

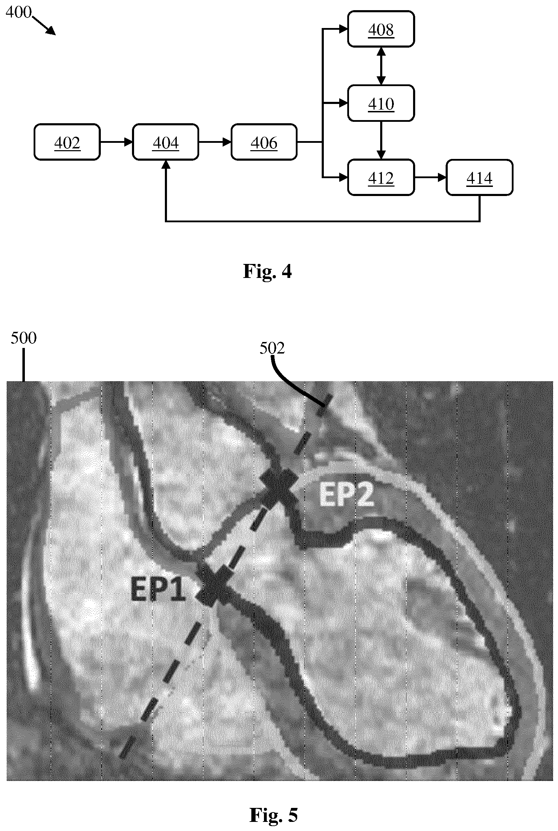

Figure 4 is a flowchart 400 representing an overview of the operation of a system (e.g., to be implemented by at least part of the system 200 such as the controller 208 and/or service provider 212) for implementing certain embodiments described herein (e.g., method 100 and/or other embodiments). Various blocks are shown in Figure 4 and certain blocks may be omitted according to certain embodiments.

In some cases, the model training may be performed prior to implementing certain embodiments described herein (e.g., the 'received imaging data' may not contribute to the training). In some cases, some model training may be performed as part of implementing certain embodiments described herein (e.g., the 'received imaging data' may be used for further model training, as referred to in Figure 4). In some cases, the level of expert input may vary. For example, manual correction may or may not be needed.

In some cases, a fresh penalty map may need to be generated for each set of 'received imaging data' to provide guidance (i.e., as an attention mechanism) used by the machine learning model to identify the at least one anatomical feature of interest from the received imaging data. In some cases, a penalty map may not need to be generated for each received imaging data (e.g., if the improved training of the machine learning model allows the machine learning model to perform the identification independently based on the received imaging data alone). In other cases, a fresh penalty map may not be needed to be generated for the model, when deployed, e.g., if the model training is performed by using the penalty map only in the loss function. Thus, if the penalty map is used as an attention mechanism during training, then a fresh penalty map may be used when deploying the model for segmenting the received imaging data.

At block 402 of the flowchart 400, imaging data such as at least one image slice is received (e.g., similar to block 102 of the method 100).

At block 404 of the flowchart 400, at least one control location (as referred to in the method 100) is detected in the received imaging data.

At block 406 of the flowchart 400, a map is generated (as referred to in the method 100).

The flowchart 400 proceeds to at least one of blocks 408, 410 and/or 412, depending on the implementation.

At block 408, a penalty-dependent loss is calculated based on the map to determine by how much to penalize error in the different regions of the imaging data.

At block 410, the machine learning model is trained based on the map generated at block 406 or based on the penalty-dependent loss calculated at block 408.

At block 412, the machine learning model (as trained at block 410, or as trained previously) is executed based on the received imaging data (of block 402) and the corresponding map (of block 406) in order to identify the at least one anatomical feature of interest (e.g., similar to block 104 of the method 100).

At block 414, the result of executing the model at block 412 may be corrected (e.g., manually by a user such as an expert). This correction may be fed back to the control location detection at block 404.

The following description refers to a possible implementation of at least some of the blocks of the flowchart 400 in the context of identifying an interface in received imaging data representative of a basal region of the heart. Reference is also made to features of the previous figures.

Block 404 of the flowchart 400 refers to control location detection. Based on an input cardiac MRI (CMRI) image (described below), a set of control locations is defined. In this implementation, the set of control locations comprises the centroids of the LV, RV, LA and RA, as well as two end points (or 'junctions') that represent the origin of the ventricular musculature.

The LV, RV, LA, RA centroids may be obtained as follows.

An initial segmentation model (e.g., any segmentation approach such as based on the U-Net architecture) is trained to obtain an initial segmentation of the LV, RV, LA and RA.

From the 4-chamber segmentation, the corresponding centroids of the LV, RV, LA and RA (i.e., center_LV, center_RV, center_LA, center_RA, respectively) are obtained. The hypothesis is that the centroids of the initial segmentation is relatively accurate even if the overall dice score is poor.

In addition, the size of each of the structures (e.g., at least one internal dimension of the LV, RV, LA and RA in each the image slice) is also estimated by identifying at least one direction and magnitude of variation corresponding to the size of the structures such as the length of the first two primary directions (and their magnitude of variation) by using a method such as principle component analysis (PCA) on the segmented regions of LV, RV, LA and RA from the initial model to obtain the respective length of each chamber, i.e., length_LV, length_RV, length_LA, length_RA.

The end points (referred to herein as 'EP1' and 'EP2') of the LV cardiac musculature can be detected by obtaining an initial myocardium segmentation (e.g., using 'traditional' nonmachine learning-based image processing and/or machine learning methods) and then EP1 and EP2 are identified by finding the origin of ventricular musculature (e.g., in the long axis 4-chamber view) such that the myocardium can be segmented. The detected points on either side of the LV where the ventricular myocardium is thinnest, represent the end points for each slice.

Figure 5 depicts the points 'EP1' and 'EP2' in an example image 500 showing the initial segmentation and myocardium segmentation described above. A dashed line 502 joining EP1 and EP2 is marked. The line 502 represents the approximate location in the basal region where the segmentation has not yet been determined.

The map is then generated based on the 6 control locations, as described below.

A map of same size as the input image is initialized with zeros.

An inverted Gaussian function (which is an example of a 'spatial function' referred to in the method 100) is applied to each of the centroids (i.e., center_LV, center_RV, center_LA, center_RA), where each inverted Gaussian function has at least one standard deviation proportional to the corresponding length described above.

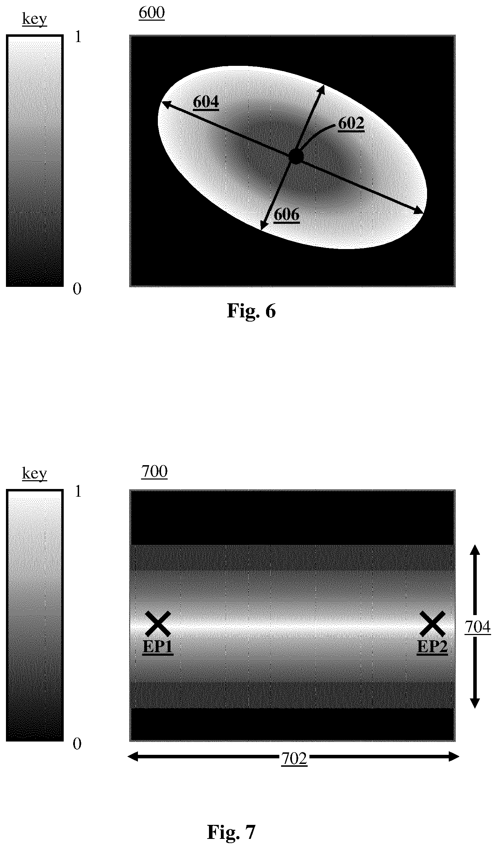

Figure 6 shows an example of the inverted Gaussian function 600, which has a spatial distribution that results in a minimum value ('0') at its origin 602 (i.e., to be centered on each centroid location) and a maximum value ('1') a specified distance away from the origin (the specified distance may depend on the radial direction from the origin). A key is provided to indicate the minimum and maximum values in the map, as well as the values in between. The parameters used to generate the inverted Gaussian function 600 depend on at least one dimension of the chamber that the inverted Gaussian function 600 is applied to. For example, as shown by Figure 6, the shape of the inverted Gaussian function 600 respectively has a major and minor dimension 604, 606 for a chamber with an approximately oval shape (i.e., the first dimension 604 is the maximum distance between opposite sides of the oval and the second dimension 606 is the minimum distance between opposite sides of the oval). Thus, the parameters for generating the inverted Gaussian centered on each respective chamber may be appropriately determined from the at least one dimension 604, 606 of the chamber (as may have been determined from the initial segmentation or by using another approach).

A Gaussian 'beam' function (which is another example of a 'spatial function' referred to in the method 100) is applied to overlap the line 502 between the points EP1 and EP2. The parameters used for generating the Gaussian beam function may depend on the distance between EP1 and EP2 and a predefined value based on an expected thickness of the anatomical feature of interest.

Figure 7 shows an example of a Gaussian beam function 700. The Gaussian beam function 700 shown in Figure 7 overlaps the points EP1 and EP2. A first parameter defining a length 702 of the Gaussian beam function 700 may be selected based on the distance between EP1 and EP2 (i.e., the length 702 is selected to be longer than the distance to ensure overlap). A second parameter (e.g., a standard deviation) defining a width 704 of the Gaussian beam function 700 may be selected based on the expected thickness of the anatomical feature of interest.

The combination of the inverted Gaussian functions referred to in Figure 6 and Gaussian beam function referred to in Figure 7 may be used to generate the map defining the penalty at the pixel locations in the imaging data.

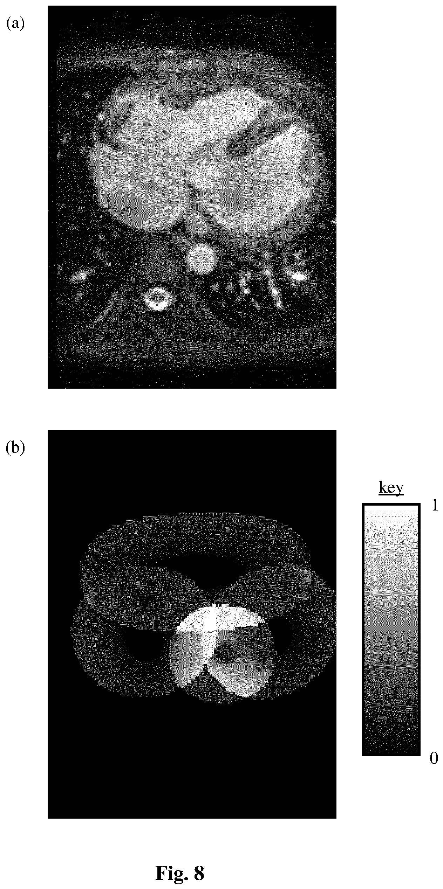

Figure 8 shows (a) an image slice of part of the heart and (b) a 'heat' map generated based on the image (a) where the heat map (b) may be overlaid with the image slice (a) to specify the region(s) of interest. As shown by the heat map (b), there are four inverted Gaussian functions (with origins at the centroid locations), each of which at least partially overlaps at least one other inverted Gaussian function as well as a Gaussian beam function (in the 'brightest' region of the heat map).

The maximum values in the heat map correspond to the regions where the Gaussian functions associated with the various control locations overlap or intersect. In this case, the maximum values correspond to the overlap of the Gaussian functions defined relative to the control locations, e.g., the area around the septal wall upper edge and basal slice, followed by the interface between the LV/LA and RV/RA, then the other interfaces or points of each structure, and finally the minimum value in the map corresponds to the location of the centroids of the LV/RV/LA/RA and exterior of these structures. A key is provided and shows the maximum value ('1') and a minimum value ('0') of the heat map. The maximum value of '1' implies an overlap of at least two different Gaussian functions although the choice of minimum and maximum value is arbitrary, depending on the design of the map and the training system.

The generated map may provide guidance to the model to identify the most challenging regions, such that the model can automatically learn features to optimize segmentation in these regions based on the location and weighting.

The map described above is generated based on certain spatial functions which have spatial distributions (which may or may not overlap with each other) corresponding to the regions within which the machine learning model is to penalize error. Other spatial functions may be used, where appropriate. In addition, while an inverted Gaussian function is described, it may also be possible to use a positive Gaussian function with its origin on the centroids to point to regions where the machine learning model is to not focus on. In other words, the map may be generated (and optionally transformed) in such a way that causes the machine learning model to focus its learning on certain regions of interest (comprising the at least one anatomical feature of interest) whether this is done by penalizing error or some other way of forcing the machine learning model to prioritize learning about these regions of interest. Thus, it is immaterial whether the values of the map are positive or negative, have a large or small scaling range, etc., as long as they are appropriately transformed for use during training.

Block 410 of the flowchart 400 refers to model training (e.g., using a 'penalty' map as described above).

During model training, a penalty map can be used to penalize the model to force the model to produce accurate segmentations in the challenging regions. In one implementation. this penalization may be done by adding an additional penalty term to any appropriate loss function used for segmentation model training. By way of example, the loss function may be defined as:

$$Loss = \sum_i Loss_i * (1 + \alpha * PenaltyMap(i))$$

Where, *Loss* (*i*) is the loss for a given voxel i, $\alpha$ is a weight coefficient associated with the penalty map, which can be experimentally determined. PenaltyMap(i) is the associated penalty at voxel i. This can be applied to a variety of loss functions. Below shows the application to (weighted/modified) dice loss which is widely used in segmentation problems. Thus, the modified Dice loss is calculated by:

$$Modified\ Dice\ Loss\ (y, y')$$
$$= 1 - \left( \sum_l w_l \frac{\left( 2 * \sum_i y_{i,l}\, y'_{i,l} \right) * (1 + \alpha * (1 - (PenaltyMap)_{i,l})}{\left( \sum_i y_{i,l} + \sum_i y'_{i,l} \right) * (1 + \alpha * (1 - (PenaltyMap)_{i,l})} \right)$$

Where $y_{j,l}$ (y_j,l) and $y'_{j,l}$ (y'_j,l) are the ground truth and prediction label of the j-th pixel of the l-th class, respectively, and $w_l$(w_l) is the weight associated with the class 1. It is noted that the Dice value (which, if equals 1 (one), means that the segmentation accuracy is high or, if equals 0 (zero), means that the segmentation accuracy is low) refers to the second term in the brackets. The structure of the Dice Loss expression means that the Dice Loss value is a high number if the Dice score is low (i.e., poor segmentation accuracy at a certain pixel location such as at a weak interface) and a low number if the Dice score is high (i.e., high segmentation accuracy at a certain pixel location such as at a chamber centroid). The Dice Loss for the j-th pixel is therefore used to indicate to the model whether to focus on learning about a certain pixel or set of pixels (e.g., due to high error in such a pixel/set of pixels).

Hence, if the segmentation accuracy is low in the region where the penalty is high, the loss of the model is in turn high, and the model automatically learns to minimize the segmentation error in this region, thus leading to higher segmentation accuracy in certain regions such as at least one region comprising the at least one anatomical feature of interest.

Block 412 of the flowchart 400 refers to execution of the trained model. Once trained, the control location(s) needed may, in some cases, be automatically generated provided to the user for acceptance/correction. Once the user accepts the regions identified, the penalty map(s) may be generated and provided as an input along with the imaging data, to guide segmentation.

Some embodiments relating to the above are described below.

In some embodiments, a spatial overlap between adjacent training regions specified by the map generated for each training data set defines at least one prioritized training region in the training data set for the machine learning model to use to prioritize penalization of learning error in the at least one prioritized training region over penalization of learning error in: non-overlapping training regions of the training data set and/or another region of the training data set.

As shown by Figure 8(b), the 'brightest' region of the map corresponds to an overlap of the different spatial functions (i.e., an overlap between the spatial distribution defined by the inverted Gaussian function(s) and the Gaussian beam function) defining multiple training regions (with different priorities) of the imaging data. Any spatial regions corresponding to a 'spatial overlap' may define a highest priority region of the imaging data to learn about (e.g., at least one 'high' priority 'prioritized training region') since the overlapping regions may have the highest intensity. The spatial regions corresponding to the non-overlapping spatial distribution of the spatial function (i.e., the 'non-overlapping training regions' described above) may define the next highest priority of the imaging data to learn about. Other regions (i.e., the 'another region' described above) of the map (i.e., the 'darkest' regions) may define the lowest priority of the imaging data to learn about. Thus, the lowest priority regions may refer to regions in the imaging data that may be relatively easy for a segmentation model to identify whereas the highest priority regions may refer to regions in the imaging data that may be challenging for the segmentation model to identify without use of the map as described herein.

In some embodiments, the received imaging data corresponds to a basal region of the subject's heart. In this case, the at least one anatomical feature of interest to be identified using the trained machine learning model may comprise at least one anatomical interface between adjacent chambers of the subject's heart.

In some embodiments, the at least one control location is identified based on a result of an initial segmentation model used to identify the at least one control location.

In some embodiments, the at least one control location comprises a centroid of a chamber of a heart. In some embodiments, the at least one control location comprises an end point and/or a junction of ventricular and/or atrial musculature defining at least one interface between respective chambers of the heart. In some embodiments, the control locations may comprise combination of at least one centroid of a chamber of a heart and at least one end point and/or junction of the ventricular and/or atrial musculature.

In some embodiments, the spatial distribution of the at least one training region is defined by at least one parameter of the spatial function. The at least one parameter may be based on at least one dimension of at least one previously-identified anatomical feature in the training data set. As referred to in relation to Figures 6 and 7, the dimension of at least one anatomical feature (e.g., at least one dimension of a heart chamber) may define the spatial extent/distribution of the spatial function. Thus, at least one parameter of the spatial function may be selected based on the at least one (measured or expected) dimension such as the length and/or width of the chamber in the image slice.

In some embodiments, the spatial function comprises a first Gaussian-based function centered about an origin defined by the at least one control location in the training data set. The spatial distribution of the at least one training region defined by the first Gaussian-based function may be distal from the origin. In other words, there may be a specified distance (which may vary depending on the radial direction from the origin) between the spatial distribution of the at least one training region defined by the first Gaussian-based function such that machine learning model does not focus on the origin but rather focuses on the region(s) defined by the spatial distribution.

In some embodiments, the first Gaussian-based function comprises an inverted Gaussian function.

In some embodiments, the volume comprises at least part of a heart. In this case, the first Gaussian-based function may be centered at a centroid of at least one chamber of the heart.

In some embodiments, the spatial function comprises a second Gaussian-based function extending between adjacent control locations in the training data set. The spatial distribution of the at least one training region defined by the second Gaussian-based function may comprise the adjacent control locations. For example, the second Gaussian-based function may overlap with the adjacent control locations. This is in contrast with the first Gaussian-based function, whose spatial distribution defining region(s) of interest does not overlap with the control location (i.e., the origin).

In some embodiments, the volume comprises at least part of a heart. In this case, the spatial distribution of the at least one training region defined by second Gaussian-based function may comprise a line connecting adjacent end points and/or junctions of ventricular and/or atrial musculature defining at least one interface between respective chambers of the heart.

In some embodiments, a loss function used for penalizing learning error is modified by the map. In some embodiments, the loss function is based on a difference between a measured value and a ground truth value for at least one pixel or voxel of the training imaging data. For example, the Dice Loss described above is an example of a 'loss function', which may be used to facilitate training of the machine learning model.

In some embodiments, the machine learning model may be trained initially based on a 'training data set'. In some embodiments, the machine learning model may be deployed based on this initial training. In some embodiments, the machine learning model may be further trained using the 'received imaging data' referred to in the method 100 (e.g., to improve the machine learning model). Thus, in some embodiments, the 'training imaging data' comprises the 'received imaging data'. In other embodiments, the 'received imaging data' referred to in the method 100 may not be used for further training.

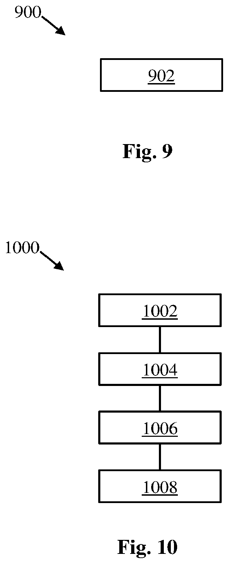

Figure 9 refers to a method 900 of generating display data according to an embodiment. The method 900 may be implemented on a computing device as described above, e.g., similar to the method 100. In some embodiments, the method 900 may be implemented independently of the method 100. In this embodiment, the method 900 is implemented in conjunction with the method 100 (e.g., the method 900 may be implemented after the identification has been performed in accordance with the method 100).

Block 902 of the method 900 comprises generating display data for displaying, on a user interface (e.g., display 210), a segmentation of the identified anatomical feature of interest relative to at least one other anatomical structure in the received imaging data.

Figure 10 refers to a method 1000 of training a machine learning model according to an embodiment. The method 1000 may be implemented on a computing device as described above, e.g., similar to the method 100. In some embodiments, the method 1000 may be implemented independently of the method 100. In this embodiment, the method 1000 is implemented in conjunction with the method 100 (e.g., the method 1000 may be implemented to facilitate training of the machine learning model referred to in Figure 1).

The method 1000 comprises training the machine learning model as follows.

At block 1002, the method 1000 comprises receiving at least one of the series of training data sets (e.g., each data set comprises at least one image slice such as the received imaging data and/or previously-obtained training data sets) and an indication of a ground truth identifying the anatomical feature of interest in each of the training data sets. In some cases, block 1002 may be like or similar to block 402 of the flowchart 400. The at least one image slice may be a two-dimensional (2D) image which can be used to construct a three-dimensional (3D) image by aligning the set of 2D images together.

At block 1004, the method 1000 comprises determining the at least one control location in the at least one training data set. In some cases, block 1004 may be like or similar to block 404 of the flowchart 400.

At block 1006, the method 1000 comprises generating the map for the at least one training data set by applying the (at least one) spatial function to the at least one control location in the training data set. The map may be indicative of a loss function to apply to each pixel or voxel of the training data set. In some cases, block 1006 may be like or similar to block 406 of the flowchart 400.

At block 1008, the method 1000 comprises training the machine learning model using the at least one training data set of the series and the corresponding map for the at least one training data set. In some cases, block 1008 may be like or similar to block 410 of the flowchart 400. As noted above, the map may be used for generating the loss function and/or as an attention mechanism.

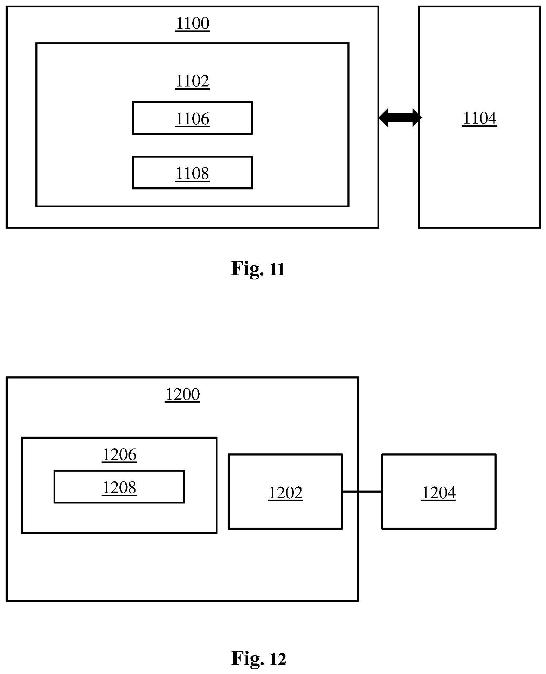

Figure 11 shows a non-transitory machine-readable medium 1100 for identifying anatomical features according to an embodiment. The non-transitory machine-readable medium 1100 comprises instructions 1102 which, when executed on at least one processor 1104, cause the at least one processor 1104 to implement certain methods described herein (e.g., methods 100, 900, 1000 and/or any related embodiments). In this embodiment, the instructions 1102 are configured to implement the method 100. The non-transitory machine-readable medium 1100 may be provided in the controller 208 and/or service provider 212 of Figure 2. In addition, the at least one processor 1104 may be provided in the controller 208 and/or service provider 212 of Figure 2. Thus, the system 200 may be used for implementing the instructions 1102 comprising the instructions described below.

The instructions 1102 comprise instructions 1106 configured to cause the at least one processor 1104 to receive imaging data representative of a volume of a subject's anatomy. The received imaging data comprises at least one unidentified anatomical feature of interest.

The instructions 1102 further comprise instructions 1108 configured to cause the at least one processor 1104 to identify the anatomical feature of interest in the received imaging data using a machine learning model configured to implement a segmentation approach to identify the anatomical feature of interest.

The machine learning model is trained using a map generated for each of a series of training data sets. Each training data set comprises training imaging data representative of a volume of a training anatomy. The map is configured to cause the machine learning model to penalize learning error in at least one training region comprising the at least one unidentified anatomical feature of interest in the training data set associated with the map.

The map for each training data set is generated by applying a spatial function to at least one control location in the training data set associated with the map.

The spatial function is configured to specify a spatial distribution of the at least one training region relative to the at least one control location in the training data set associated with the map.

In some embodiments, the instructions 1102 comprise further instructions to implement any of the other methods described herein.

Figure 12 shows apparatus 1200 for identifying anatomical features according to an embodiment. The apparatus 1200 comprises at least one processor 1202 (e.g., implemented by a computing device such as in the controller 208 and/or service provider 212 depicted by Figure 2). The at least one processor 1202 is communicatively coupled to an interface 1204 for communicating data (e.g., with the radiographic imaging apparatus 202 and/or any other entity with which the at least one processor 1202 may exchange data with during use). In this embodiment, the interface 1204 is configured to receive imaging data representative of a volume of a subject's anatomy. The received imaging data comprises at least one unidentified anatomical feature of interest. The interface 1204 may be part of the controller 208 and/or service provider 212 referred to in Figure 2.

The apparatus 1200 further comprises a non-transitory machine-readable medium 1206 storing instructions 1208 readable and executable by the at least one processor 1202 to perform a method corresponding to certain methods described herein (e.g., any of the methods 100, 900, 1000 and/or any other methods described herein).

The instructions 1208 are configured to cause the at least one processor 1202 to identify the anatomical feature of interest in the received imaging data using a machine learning model configured to implement a segmentation approach to identify the anatomical feature of interest.

The machine learning model is trained using a map generated for each of a series of training data sets. Each training data set comprises training imaging data representative of a volume of a training anatomy. The map is configured to cause the machine learning model to penalize learning error in at least one training region comprising the at least one unidentified anatomical feature of interest in the training data set associated with the map.

The map for each training data set is generated by applying a spatial function to at least one control location in the training data set associated with the map.

The spatial function is configured to specify a spatial distribution of the at least one training region relative to the at least one control location in the training data set associated with the map.

In some embodiments, the instructions 1208 may comprise further instructions to implement any of the other methods described herein.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a generalpurpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method (100), comprising:

   receiving (102) imaging data representative of a volume of a subject's anatomy,
   wherein the received imaging data comprises at least one unidentified anatomical feature of interest; and
   identifying (104) the anatomical feature of interest in the received imaging data using a machine learning model configured to implement a segmentation approach to identify the at least one anatomical feature of interest, wherein:

   the machine learning model is trained using a map generated for each of a series of training data sets, wherein each training data set comprises training imaging data representative of a volume of a training anatomy, wherein the map is configured to cause the machine learning model to penalize learning error in at least one training region comprising the at least one unidentified anatomical feature of interest in the training data set associated with the map;
   the map for each training data set is generated by applying a spatial function to at least one control location in the training data set associated with the map; and

the spatial function is configured to specify a spatial distribution of the at least one training region relative to the at least one control location in the training data set associated with the map.

2. The method of claim 1, wherein a spatial overlap between adjacent training regions specified by the map generated for each training data set defines at least one prioritized training region in the training data set for the machine learning model to use to prioritize penalization of learning error in the at least one prioritized training region over penalization of learning error in: non-overlapping training regions of the training data set and/or another region of the training data set.

3. The method of any of claims 1 to 2, wherein the received imaging data corresponds to a basal region of the subject's heart, and wherein the at least one anatomical feature of interest to be identified using the trained machine learning model comprises at least one anatomical interface between adjacent chambers of the subject's heart.

4. The method of any of claims 1 to 3, wherein:
the at least one control location is identified based on a result of an initial segmentation model used to identify the at least one control location.

5. The method of claim 4, wherein the at least one control location comprises:

a centroid of a chamber of a heart; and/or
an end point and/or a junction of ventricular and/or atrial musculature defining at least one interface between respective chambers of the heart.

6. The method of any of claims 1 to 5,
wherein the spatial distribution of the at least one training region is defined by at least one parameter of the spatial function, wherein the at least one parameter is based on at least one dimension of at least one previously-identified anatomical feature in the training data set.

7. The method of any of claims 1 to 6, wherein the spatial function comprises a first Gaussian-based function centered about an origin defined by the at least one control location in the training data set, wherein the spatial distribution of the at least one training region defined by the first Gaussian-based function is distal from the origin.

8. The method of claim 7, wherein the first Gaussian-based function comprises an inverted Gaussian function.

9. The method of any of claims 7 to 8, wherein the volume comprises at least part of a heart, and wherein the first Gaussian-based function is centered at a centroid of at least one chamber of the heart.

10. The method of any of claims 1 to 9, wherein the spatial function comprises a second Gaussian-based function extending between adjacent control locations in the training data set, wherein the spatial distribution of the at least one training region defined by the second Gaussian-based function comprises the adjacent control locations.

11. The method of claim 10, wherein the volume comprises at least part of a heart, and wherein the spatial distribution of the at least one training region defined by second Gaussian-based function comprises a line connecting adjacent end points and/or junctions of ventricular and/or atrial musculature defining at least one interface between respective chambers of the heart.

12. The method of any one of claims 1 to 11, wherein a loss function used for penalizing learning error is modified by the map, wherein the loss function is based on a difference between a measured value and a ground truth value for at least one pixel or voxel of the training imaging data.

13. The method (1000) of any of claims 1 to 12, comprising training the machine learning model by:

receiving (1002) at least one of the series of training data sets and an indication of a ground truth identifying the anatomical feature of interest in each of the training data sets;
determining (1004) the at least one control location in the at least one training data set;
generating (1006) the map for the at least one training data set by applying the spatial function to the at least one control location in the training data set, wherein the map is indicative of a loss function to apply to each pixel or voxel of the training data set; and

training (1008) the machine learning model using the at least one training data set of the series and the corresponding map for the at least one training data set.

**14.** A non-transitory machine-readable medium (1100) storing instructions (1102) executable by at least one processor (1104), wherein the instructions are configured to cause the at least one processor to:

receive (1106) imaging data representative of a volume of a subject's anatomy,
wherein the received imaging data comprises at least one unidentified anatomical feature of interest; and
identify (1108) the anatomical feature of interest in the received imaging data using a machine learning model configured to implement a segmentation approach to identify the at least one anatomical feature of interest, wherein:

the machine learning model is trained using a map generated for each of a series of training data sets, wherein each training data set comprises training imaging data representative of a volume of a training anatomy, wherein the map is configured to cause the machine learning model to penalize learning error in at least one training region comprising the at least one unidentified anatomical feature of interest in the training data set associated with the map;
the map for each training data set is generated by applying a spatial function to at least one control location in the training data set associated with the map; and
the spatial function is configured to specify a spatial distribution of the at least one training region relative to the at least one control location in the training data set associated with the map.

**15.** Apparatus (1200) comprising:

at least one processor (1202) communicatively coupled to an interface (1204),
wherein the interface is configured to receive imaging data representative of a volume of a subject's anatomy,
wherein the received imaging data comprises at least one unidentified anatomical feature of interest; and
a non-transitory machine-readable medium (1206) storing instructions (1208) readable and executable by the at least one processor, wherein the instructions are configured to cause the at least one processor to identify the anatomical feature of interest in the received imaging data using a machine learning model configured to implement a segmentation approach to identify the at least one anatomical feature of interest, wherein:

the machine learning model is trained using a map generated for each of a series of training data sets, wherein each training data set comprises training imaging data representative of a volume of a training anatomy, wherein the map is configured to cause the machine learning model to penalize learning error in at least one training region comprising the at least one unidentified anatomical feature of interest in the training data set associated with the map;
the map for each training data set is generated by applying a spatial function to at least one control location in the training data set associated with the map; and
the spatial function is configured to specify a spatial distribution of the at least one training region relative to the at least one control location in the training data set associated with the map.

100

102

104

**Fig. 1**

200

212

208

210

202

206

204

**Fig. 2**

(a)

(b)

**Fig. 3**

400

Fig. 4

Fig. 5

key

**Fig. 6**

key

**Fig. 7**

(a)

(b)

**Fig. 8**

900

```
┌─────────────────────┐
│         902         │
└─────────────────────┘
```

**Fig. 9**

1000

```
┌─────────────────────┐
│        1002         │
└─────────────────────┘
          │
┌─────────────────────┐
│        1004         │
└─────────────────────┘
          │
┌─────────────────────┐
│        1006         │
└─────────────────────┘
          │
┌─────────────────────┐
│        1008         │
└─────────────────────┘
```

**Fig. 10**

1100

1102

1106

1108

1104

**Fig. 11**

1200

1206

1208

1202

1204

**Fig. 12**

| | Europäisches Patentamt<br>European Patent Office<br>Office européen des brevets | **EUROPEAN SEARCH REPORT** | Application Number<br>**EP 21 18 8415** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/223725 A1 (LU XIAOGUANG [US] ET AL) 25 July 2019 (2019-07-25)<br>* abstract *<br>* paragraph [0004] – paragraph [0032] *<br>* paragraph [0054] – paragraph [0078] *<br>* figures 1-3 * | 1-15 | INV.<br>G06V10/44<br>G06V10/774<br>G06V10/82<br>G06V30/18<br>G06V10/25<br>G06V10/26 |
| A | RONNEBERGER OLAF ET AL: "U-Net: Convolutional Networks for Biomedical Image Segmentation",<br>5 October 2015 (2015-10-05), ADVANCES IN BIOMETRICS : INTERNATIONAL CONFERENCE, ICB 2007, SEOUL, KOREA, AUGUST 27 – 29, 2007 ; PROCEEDINGS; [LECTURE NOTES IN COMPUTER SCIENCE; LECT.NOTES COMPUTER], SPRINGER, BERLIN, HEIDELBERG, PAGE(S) 234 – 241,<br>XP047321426,<br>ISBN: 978-3-540-74549-5<br>* abstract *<br>* page 234 – page 239 *<br>* figure 1 * | 1-15 | |
| A | OKTAY OZAN ET AL: "Attention U-Net: Learning Where to Look for the Pancreas",<br>ARXIV:1804.03999V3,<br>20 May 2018 (2018-05-20), pages 1-10,<br>XP055816199,<br>[retrieved on 2021-06-21]<br>* abstract *<br>* page 1 – page 5 *<br>* figures 1,2 * | 1-15 | TECHNICAL FIELDS SEARCHED (IPC)<br>G06K<br>G06V |

The present search report has been drawn up for all claims

| Place of search | Date of completion of the search | Examiner |
|---|---|---|
| **The Hague** | **5 January 2022** | **Karwe, Markus** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 8415

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2022

| Patent document cited in search report | Publication date | Patent family member(s) | Publication date |
|---|---|---|---|
| US 2019223725 A1 | 25-07-2019 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RONNEBERGER et al.** *"U-Net: Convolutional Networks for Biomedical Image Segmentation", arXiv: 1505.04597,* 2015